# EUROPÄISCHE PATENTANMELDUNG

(11) **EP 1 803 767 A1**
(43) Veröffentlichungstag der Anmeldung: **04.07.2007**
(21) Anmeldenummer: 05028080.9
(22) Anmeldetag: 21.12.2005
(51) Int. Cl.: C08K 5/00, C08F 8/06, C08J 7/12

(54) **Thermoplastische Polymerzusammensetzung zur Verwendung bei reaktiven Medien**

(71) Anmelder: Georg Fischer DEKA GmbH, 35232 Dautphetal-Mornshausen (DE)
(72) Erfinder: Schuessler, Stephan, 35094 Caldern (DE); Hellmann, Goetz, 55129 Mainz (DE); Knecht, Josef, 35287 Amoeneburg (DE)
(74) Vertreter: Weiss, Wolfgang

(57) **Zusammenfassung**

Es wird eine thermoplastische Polymerzusammensetzung vorgeschlagen zur Verwendung bei reaktiven und/oder aggressiven Medien, mit einem in der Masse des Polymers verteilten Zusatzstoff, wobei der Zusatzstoff mit dem reaktiven und/oder aggressiven Medium an der Grenzfläche zwischen dem Medium und dem Polymer eine Reaktion eingeht, wobei die Reaktionsprodukte gegenüber dem reaktiven und/oder aggressiven Medium nahezu inert sind und wobei die Reaktionsprodukte im Polymer festlegbar sind.

## Beschreibung

Die Erfindung bezieht sich auf eine thermoplastische Polymerzusammensetzung zur Verwendung bei reaktiven Medien, mit einem in der Masse des Polymers verteilten Zusatzstoff, wobei der Zusatzstoff mit dem reaktiven Medium an der Grenzfläche zwischen dem Medium und dem Polymer eine Reaktion eingeht.

Im Rohrleitungsbau werden als Werkstoffe für die Rohrleitungen und weiteren mediumsberührten Teilen vermehrt Kunststoffe eingesetzt. Die Auswahl des Kunststoffes richtet sich nach seinen physikalischen Eigenschaften und nach der jeweiligen Medienbeständigkeit sowie den chemischen Eigenschaften des Mediums.

Zusatz-, Füll- oder Hilfsstoffe werden beispielsweise eingesetzt um:
- die Verarbeitung zu unterstützen mit externen oder internen Gleitmitteln, Gelierhilfen oder Verarbeitungsstabilisatoren,
- die thermo-oxidative Stabilität unter Gebrauchsbedingungen des Produktes für einen gewissen Zeitraum (quasi als Puffer) sicher zu stellen,
- die statische Aufladung an der Oberfläche des Kunststoffes zu verhindern,
- die Flammbeständigkeit zu erhöhen,
- die Beständigkeit gegen UV-Strahlung und/oder Bewitterung zu verbessern,
- die mechanische Eigenschaften gezielt zu modifizieren usw.

Aus der EP 772 648 B2 sind anorganische und organische Zusatzstoffe zur Stabilisierung von PVC-Folien beim Kalandrieren bekannt. Die Zusatzstoffe sollen einerseits die Haftung der Folie an den Walzen verhindern und anderseits nicht zur Bildung eines Belages auf den Walzen führen.

Aus der EP 1 311 605 B1 sind reaktive anorganische Füllstoffe, beispielsweise Hydrotalcite, d. h. Doppelschichthydroxide mit Magnesium und Aluminium, bekannt, die an der Oberfläche mit amphiphilen Polymeren, beispielsweise Aminoplasten, modifiziert sind und die als Stabilisatoren zu Polymeren, insbesondere zu PVC, verwendet werden.

Weiterhin sind aus der WO 03/064511 A2 Stabilisatoren für Polyolefinen bekannt. In Rohrleitungssysteme für die Trinkwasserversorgung sollen diese Stabilisatoren die Lebensdauer des Leitungsnetzes, auch bei der Verwendung von chloriertem Trinkwasser, verlängern.

Ausgehend von diesem Stand der Technik ist es Aufgabe der Erfindung, eine thermoplastische Polymerzusammensetzung zur Verwendung bei aggressiven Medien, insbesondere zur Verwendung in Rohrleitungen zur Förderung von feuchtem Chlorgas, wie beispielsweise bei der Chlorgewinnung durch Elektrolyse, anzugeben, die eine möglichst lange Lebensdauer der Rohrleitung gewährleistet, die möglichst einfach zu verarbeiten ist und die die thermischen und mechanischen Eigenschaften des zugrunde liegenden Polymers nicht wesentlich beeinflusst.

Diese Aufgabe wird gelöst durch eine thermoplastische Polymerzusammensetzung zur Verwendung bei reaktiven Medien, mit einem in der Masse des Polymers verteilten Zusatzstoff, wobei der Zusatzstoff mit dem reaktiven Medium an der Grenzfläche oder in der Grenzschicht zwischen dem Medium und dem Polymer eine Reaktion eingeht, wobei die Reaktionsprodukte gegenüber dem reaktiven Medium nahezu inert sind und wobei die Reaktionsprodukte im Polymer festlegbar sind.

Bevorzugte Weiterbildungen der Erfindung ergeben sich aus den abhängigen Ansprüchen.

Es ist von Vorteil, dass die Polymerzusammensetzung in der Chlorelektrolyse verwendet werden kann. Dies wird dadurch erreicht, dass das Polymer ein nachchloriertes Polyvinylchlorid (PVC-C) ist.

Es ist auch von Vorteil, dass die Polymerzusammensetzung eine verarbeitungsstabile reduzierende Komponente enthält, deren Reaktionsprodukt nach der Umsetzung mit der reaktiven Spezies des Mediums eine unter den gegebenen Bedingungen chemisch inerte Spezies bildet, welche zur Ausbildung einer Schutzschicht geeignet ist. Dies wird dadurch erreicht, dass das Metall für den Zusatzstoff Ti, V, Sn oder Mo ist.

Es ist weiter auch von Vorteil, dass die Polymerzusammensetzung möglichst einfach, z.B. über einen Trocken-Heissmisch-Prozess, hergestellt werden kann. Dies wird dadurch erreicht, dass der Zusatzstoff, als Feststoff, beispielsweise als Mikro- oder Nanopartikel, oder flüssig auf einen Träger aufgebracht dem Polymer beigemischt wird.

Der Grundgedanken der Erfindung ist es, an der Kontaktfläche zwischen dem Polymerwerkstoff einer Rohrleitung und dem in der Rohrleitung geförderten aggressiven Medium eine Autopassivierung des Polymers zu bewirken. Aehnlich wie die Oxidschicht an der Oberfläche von Al, Ti oder Cr das darunter liegende Metall gegen Korrosion schützt, kann ein reaktiver Zusatzstoff an der Kontaktfläche eine diffusionshemmende und/oder diffusionsdichte Schicht bilden und so das Polymer gegen Zersetzung und Verlust der mechanischen Eigenschaften schützen. Der Zusatzstoff wirkt hierbei nicht als ein Stabilisator, d.h. als ein Puffer um die thermo-oxidative Stabilität des Polymers über einen möglichst langen Zeitraum zu gewährleisten. Der Zusatzstoff dient zur aktiven Bildung von Reaktionsprodukten, die nahezu inert sind, die im Kunststoff der Rohrleitung verbleiben und die eine Barriere für die Diffusion der reaktiven und/oder aggressiven Komponenten des geförderten Mediums darstellen.

Vor allem in der Chloralkalielektrolyse wird für den Transport der Produkte der Elektrolysezellen, wie beispielsweise das feuchte Chlorgas, die abgereicherte und mit Chlor gesättigter Kochsalzsole (der Anolyt) vermehrt nachchloriertes Polyvinylchlorid (PVC-C) als Polymerwerkstoff eingesetzt. Als wichtigstes Verfahren hat sich das Membranelektrolyseverfahren durchgesetzt, weil hierbei der Stromverbrauch am niedrigsten ist, weil die Produkte am reinsten sind und weil das Herstellungsverfahren ohne die Umwelt gefährdenden Hilfsstoffen, wie beispielsweise Quecksilber für das Amalgamverfahren, auskommt.

Das Membranverfahren läuft typischerweise ab bei Temperaturen um 90 °C. Bei diesen Bedingungen wird der Polymerwerkstoff der Rohrleitungen, je nach eingestelltem pH-Wert, allmählich oxidiert und chloriert, wobei die detaillierten Zusammenhänge zwischen der Korrosion des PVC-C und die Betriebsbedingungen in der Elektrolyse noch nicht abschliessend erforscht sind.

Als alternative Lösungen für das Problem der Rohrleitungskorrosion werden verschiedene andere Rohrleitungswerkstoffe vorgeschlagen und in der Praxis eingesetzt:
Rohrleitungen aus Titan oder Titanlegierungen sind zwar chemisch beständig aber relativ teuer oder am Markt schlecht verfügbar und relativ schwierig fachgerecht zu verarbeiten. Eine korrosionsresistente Verschweissung ist schwierig zu erreichen.

Reine GFK-Rohre sind zwar günstig im Preis, werden aber nach erfolgter Korrosion je nach verwendeter Rezeptur relativ schnell abrasiv angegriffen, wobei die Abrasionsprodukte die geförderten Medien kontaminieren und den Wirkungsgrad der Elektrolysemembrane reduzieren können. Herausgerissene Glasfasern führen im duroplastischen Polymerwerkstoff zu Kapillaren, wodurch die Korrosion auf einer grösseren Angriffsfläche wirken kann.

Verbundrohrleitungen aus GFK beispielsweise mit PVDF sind relativ teuer. Da PVDF selbst relativ gut durchlässig ist für Wasserdampf, verschiebt sich unter den oben genannten Betriebsbedingungen die Angriffsfläche in die Grenzschicht zwischen dem PVDF-Kernrohr und dem GFK-Mantelrohr. Durch die Einwirkung von Chlor, Chlorwasserstoff und den reaktiven Zwischenstufen der einwirkenden Chemikalien sowie den durchdiffundierenden Wasserdampf kommt es durch Osmose und Korrosionsvorgänge am Duroplast bzw. an den Glasfasern zu Delaminierung und Blisterbildung. Dieser Prozess wird durch den im Vergleich zum GFK deutlich höheren thermischen Ausdehnungskoeffizienten von PVDF verstärkt.

Ein daher heute gebräuchlicher Standard sind Rohrleitungen aus einem Verbundmaterial, dass aufgebaut ist aus einem Kernrohr aus nachchloriertem PVC (PVC-C) und einem Mantelrohr aus GFK. Die verwendeten Halbzeuge (Platten, Rohre und Schweissdrähte) sind infolge eines kleinen Temperaturfensters relativ schwierig zu verschweissen.

Die Erfindung wird durch folgendes Ausführungsbeispiel beschrieben.

In ein für den industriellen Anlagenbau geeignetes handelsübliches pulverförmiges Trockencompound (Dry-Blend) aus nachchloriertem Polyvinylchlorid (PVC-C) wird in einer Mischanlage etwa 1 Gew.% eines redoxaktiven Metallsalzes, beispielsweise eine Sn⁺²-Verbindung zugegeben. Diese Sn⁺²-Verbindung wird in fester Form, beispielsweise als SnCl₂ oder gebunden an einem Trägermaterial, wie beispielsweise Zinnstearat, zugemischt. Alternativ kann die redoxaktive Komponente auch direkt bei der Erstellung des Dry-Blends im Heissmischer als fester Rezepturbestandteil einer PVC-C-Eigenmischung eingesetzt werden.

Aus diesem Material werden in einer Extrusionsanlage Rohrleitungen für die Anwendung in der Chlorelektrolyse, insbesondere für den Transport der Chlorgasgesättigten und abgereicherten Kochsalzsole(Anolyt), oder des feuchten Chorgases hergestellt. Der redoxaktive Zusatzstoff SnCl₂ ist gleichmässig in der Masse des PVC-C verteilt. Die so erhaltene Rohrleitung ist wesentlich korrosionsbeständiger als unbehandeltes PVC-C. Die Polymerzusammensetzung mit dem Zusatzstoff kann auch zur Herstellung von Kunststoffplatten oder-Drähten verwendet werden.

Mit der hier beschriebenen Polymerzusammensetzung wird die Einwirkung der hypochlorigen Säure und deren Folgeprodukte, die als Hauptverursacher der Korrosion angesehen werden und die in einer Radikalbildung in der Summe zu einer Chlorierung und einer oxidativen Zerstörung des Polymerwerkstoffes führen, wirksam reduziert.

Die hypochlorige Säure, bzw. deren reaktive Folgeprodukte, reagiert mit dem Zusatzstoff und an den betreffenden Stellen im Polymer wird dadurch suksessive eine diffusionshemmende und/oder diffusionsdichte Schicht, beispielsweise bestehend aus SnO₂ aufgebaut. Möglicherweise greift der Zusatzstoff auch synergistisch in die Kettenreaktion der Radikalbildung ein, wobei die Wirkung des ohnehin in der Polymermischung anwesenden Thermostabilisatoradditivs synergistisch beeinflusst wird.

Auch bei der Bearbeitung oder bei der betriebsbedingten Abrasion des Rohrleitungsmaterials kann ständig eine neue Schutzschicht ausgebildet werden, weil der Zusatzstoff im Polymer homogen verteilt vorhanden ist. Somit kann im gesamten Rohrleitungssystem, auch in den Verbindungsstellen, eine gleichmässige Passivierung des Polymerwerkstoffes erreicht werden.

Das erfindungsgemässe Konzept kann auch auf anderen Polymeren und anderen aggressiven Medien angewendet werden. Beispielsweise könnte mit dem Prinzip der Autopassivierung auch im Bereich der Bodenheizungstechnik oder anderen Heisswasserleitungen eine Rohrleitung aus Polyolefinen mit einer diffusionshemmenden Schicht ausgebildet werden und somit gegen die Zersetzung durch den im heissen Wasser gelösten Sauerstoff besser geschützt werden. Entsprechend angepasste Polymer-/Additivsysteme sind auch für andere oxidativ oder aggressiv wirkenden Medien, beispielsweise Salpetersäure, denkbar.

## Patentansprüche

1. Thermoplastische Polymerzusammensetzung zur Verwendung bei reaktiven Medien, mit einem in der Masse des Polymers verteilten Zusatzstoff, wobei der Zusatzstoff mit dem reaktiven Medium an der Grenzfläche oder in der Grenzschicht zwischen dem Medium und dem Polymer eine Reaktion eingeht, **dadurch gekennzeichnet, dass** die Reaktionsprodukte gegenüber dem reaktiven Medium nahezu inert sind und dass die Reaktionsprodukte im Polymer festlegbar sind.

2. Thermoplastische Polymerzusammensetzung nach dem Anspruch 1, **dadurch gekennzeichnet, dass** das Polymer ein nachchloriertes Polyvinylchlorid (PVC-C) ist.

3. Thermoplastische Polymerzusammensetzung nach dem Anspruch 1, **dadurch gekennzeichnet, dass** das Polymer ein weichmacherfreies Polyvinylchlorid (PVC-U) ist.

4. Thermoplastische Polymerzusammensetzung nach dem Anspruch 1, **dadurch gekennzeichnet, dass** das Polymer ein Polyolefin ist.

5. Thermoplastische Polymerzusammensetzung nach dem Anspruch 1, **dadurch gekennzeichnet, dass** das Polymer ein Polyvinylidenfluorid (PVDF) ist.

6. Thermoplastische Polymerzusammensetzung nach mindestens einem der Ansprüche 1 bis 5, **dadurch gekennzeichnet, dass** die Reaktionsprodukte im Polymer eine für das reaktive und/oder aggressive Medium diffusionshemmende Schicht bilden.

7. Thermoplastische Polymerzusammensetzung nach mindestens einem der Ansprüche 1 bis 6, **dadurch gekennzeichnet, dass** die Reaktionsprodukte im Polymer eine für das reaktive und/oder aggressive Medium diffusionsdichte Schicht bilden.

8. Thermoplastische Polymerzusammensetzung nach mindestens einem der Ansprüche 1 bis 7, **dadurch gekennzeichnet, dass** der Zusatzstoff ein redoxaktives Metallsalz ist.

9. Thermoplastische Polymerzusammensetzung nach mindestens einem der Ansprüche 1 bis 8, **dadurch gekennzeichnet, dass** das Metall für den Zusatzstoff Ti, V, Sn oder Mo ist.

10. Thermoplastische Polymerzusammensetzung nach mindestens einem der Ansprüche 1 bis 9, **dadurch gekennzeichnet, dass** der Gewichtsanteil des Zusatzstoffes im Polymer 0.1 bis 6 % beträgt.

11. Thermoplastische Polymerzusammensetzung nach mindestens einem der Ansprüche 1 bis 10, **dadurch gekennzeichnet, dass** der Zusatzstoff in der Masse des Polymerwerkstoffs homogen verteilt vorhanden ist.

12. Thermoplastische Polymerzusammensetzung nach mindestens einem der Ansprüche 1 bis 11, **dadurch gekennzeichnet, dass** der Zusatzstoff in flüssiger Form dem Polymer beigemischt wird.

13. Thermoplastische Polymerzusammensetzung nach mindestens einem der Ansprüche 1 bis 11, **dadurch gekennzeichnet, dass** der Zusatzstoff in fester Form, beispielsweise als Mikro- oder Nanopartikel, dem Polymer beigemischt wird.

14. Thermoplastische Polymerzusammensetzung nach mindestens einem der Ansprüche 1 bis 13, **dadurch gekennzeichnet, dass** der Zusatzstoff auf einen Träger aufgebracht dem Polymer beigemischt wird.

15. Thermoplastischen Polymerzusammensetzung nach mindestens einem der Ansprüche 1 bis 14, **dadurch gekennzeichnet, dass** die Polymerzusammensetzung zur Herstellung von Rohrleitungen, Platten oder Drähten verwendet wird.

16. Thermoplastischen Polymerzusammensetzung nach mindestens einem der Ansprüche 1 bis 15, **dadurch gekennzeichnet, dass** die Polymerzusammensetzung zur Herstellung von Rohrleitungen, Platten oder Drähten für die Chloralkalielektrolyse verwendet wird.
